# EUROPÄISCHE PATENTSCHRIFT

(11) **EP 3 995 987 B1**
(45) Veröffentlichungstag und Bekanntmachung des Hinweises auf die Patenterteilung: **20.08.2025**
(21) Anmeldenummer: 20205732.9
(22) Anmeldetag: 04.11.2020
(51) Int. Cl.: G06K 7/10

(54) **SENSORANORDNUNG**
SENSOR ARRANGEMENT
SYSTEME DE CAPTEUR

(43) Veröffentlichungstag der Anmeldung: 11.05.2022
(73) Patentinhaber: Leuze electronic GmbH + Co. KG, 73277 Owen/Teck (DE)
(72) Erfinder: Köbel, Herbert, 73277 Owen/Teck (DE)
(74) Vertreter: Ruckh, Rainer Gerhard

(56) Entgegenhaltungen:
- EP-A1- 2 876 059
- EP-A1- 3 038 061
- EP-A2- 1 873 681
- WO-A1-01/65427
- DE-A1- 102010 014 937
- JP-A- 2009 129 029
- JP-B2- 4 858 881
- US-B2- 10 650 368
- US-B2- 8 976 030
- LEUZE: "Leuze Electronic kooperiert mit Microsoft", 1 February 2017 (2017-02-01), XP055452447, Retrieved from the Internet <URL:http://www.git-sicherheit.de/printpdf/23260> [retrieved on 20180219]

## Beschreibung

Die Erfindung betrifft eine Sensoranordnung gemäß dem Oberbegriff des Anspruchs 1.

Derartige Sensoranordnungen können von Codelesern gebildet sein, mittels derer auf Objekten angeordnete Codes gelesen werden können. Die Codeleser sind generell als optische Sensoren ausgebildet, beispielsweise in Form von Scannern oder Kamerasensoren. Mit den so ausgebildeten Codelesern werden Codes, insbesondere 1D- oder 2D-Barcodes optisch abgetastet und dekodiert. Durch die Erfassung der Codes mit den Codelesern werden die mit den Codes versehenen Objekte identifiziert. Dies kann insbesondere in komplexen Automatisierungsanlagen für eine Objektverfolgung ausgenutzt werden.

Weiterhin sind zur Objektidentifizierung und Objektverfolgung RFID-Systeme im Einsatz. Objekte werden dann mit Transpondern versehen, die jeweils einen lokalen Speicher aufweisen. In diesem Speicher kann nicht nur eine Identifikation des Objekts hinterlegt sein. Vielmehr können in den Speichern auch weitere Objektdaten, wie zum Beispiel Größe oder Beladungszustand eines Objekts hinterlegt sein. Die in den Transpondern hinterlegten Daten können von RFID-Leseeinheiten ausgelesen werden, um diese zum Beispiel für Automatisierungsprozesse in einer Automatisierungsanlage zu nutzen. Weiterhin können mit den RFID-Leseeinheiten auch Objektdaten in die Transponder eingeschrieben werden.

Die EP 3 038 061 A1 betrifft eine Vorrichtung mit einer Datenbrille, mit der Augmented-Reality Daten an einem Zielobjekt angezeigt werden können. Hierzu wird die Distanz zu dem jeweiligen Zielobjekt bestimmt.

Die US 8 976 030 B2 betrifft ein Kassensystem, das einen Codeleser zum Lesen von Codes auf Produkten aufweist. Weiterhin ist ein Sicherheitscodedetektor vorgesehen, der RFID-tags lesen kann.

Die JP 2009 129029 A betrifft ein Kassen- und Verwaltungssystem mit einem Coupon-Managementsystem sowie einem Barcodeleser zum Lesen von Barcodes.

Die EP 2 876 059 A1 betrifft ein Automatisierungssystem zur Kontrolle der Entnahme von Waren in einem Kaufhaus. Das System umfasst eine Kamera zum Lesen von Produkt-Identifikatoren.

In Leuze:"Leuze Electronic kooperiert mit Microsoft", 1. Februar 2017 (2017-02-01), XP055452447, zu finden im Internet: URL:http://www.git-sicherheit.de/printpdf/23260 ist eine Ankopplung von Sensoren, insbesondere Barcodeleser, an einer Cloud beschrieben.

Die DE 10 2010 014 937 A1 betrifft ein aufwandsarmes Verfahren zum Lesen eines Codes auf einem Substrat, wobei der Code innerhalb eines Auswertebereiches auf dem Substrat an unterschiedlichen Positionen durch wenigstens zwei Codeteile identischen Codeinhalts repräsentiert wird und wobei von dem Auswertebereich mit einer bildgebenden Code-Lesevorrichtung wenigstens ein digitales Bild erzeugt wird, das in einem Bildverarbeitungsrechner ausgewertet wird, wobei zunächst Codefragmente des einen Codes identifiziert werden, aus den Codefragmenten Fragmentverbände und Fragmentscharen zusammengefügt werden und diese einem Decoder zum Decodieren des einen Codes zugeführt werden.

Die US 10 650 368 B2 betrifft eine Methode zum Lesen von Barcodes mittels eines Barcodescanners.

Die EP 1 873 681 A2 betrifft ein RFID-System mit wenigstens einer Sende- und Empfangseinheit sowie einer Anordnung von Transpondern. In der Sende- und Empfangseinheit ist ein Webserver integriert. Dadurch wird eine universelle Schnittstelle zur Vorgabe und Kontrolle der Funktionalität des RFID-Systems geschaffen.

Die JP 4 858 881 B2 und die WO 01/65427 A1 betreffen automatische Kassensysteme mit Codelesern zur Produktidentifikation.

Der Erfindung liegt die Aufgabe zugrunde, eine Sensoranordnung der eingangs genannten Art bereitzustellen, welche eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Der Grundgedanke der Erfindung besteht somit darin, die Vorteile von optischen Sensoren in Form von Codelesern, die eine kostengünstige Objektidentifikation ermöglichen, mit den Vorteilen eines RFID-Systems, das in den Transpondern eine dezentrale, mobile Datenspeicherung ermöglicht, zu kombinieren.

Mit den Codelesern der erfindungsgemäßen Sensoranordnung kann erheblich kostengünstiger als mit RFID-Systemen eine Objektidentifikation durchgeführt werden.

Die Nachbildung, das heißt Emulation eines RFID-Sensors gelingt erfindungsgemäß dadurch, dass der wenigstens eine Codeleser über einen Emulator-Datenkanal mit der wenigstens einen Rechnereinheit verbunden ist, wobei dieser Emulator-Datenkanal ausschließlich, das heißt exklusiv dazu genutzt wird, um Transponder-Emulator-Daten in einen Speicherbereich einer Speichereinheit vom Codeleser einzulesen oder Transponder-Emulator-Daten aus dem Speicherbereich der Speichereinheit auszulesen.

Alternativ oder zusätzlich ist noch ein Ein- oder Auslesen von Subsystemdaten möglich. Bei den Subsystemdaten handelt es sich um Daten des Codelesers selbst oder um Daten von mit dem Codeleser wechselwirkenden Einheiten wie Aktoren, Steuerungen und dergleichen. Ohne Beschränkung der Allgemeinheit wird im Folgenden allein auf die Transponder-Emulator-Daten Bezug genommen.

Generell erfolgt eine indirekte Adressierung derart, dass der Code, der mit dem Codeleser gelesen wird, diesen Speicherbereich der Speichereinheit definiert.

Dadurch wird die dezentrale Speicherfunktion eines RFID-Sensors mit dem erfindungsgemäßen RFID-Emulator-Sensor nachgebildet.

Wesentlich ist, dass die Rechnereinheit und der Emulator-Datenkanal exklusiv zur Emulation des RFID-Emulator-Sensors genutzt werden.

Darüber hinaus kann der so gebildete RFID-Emulator-Sensor an ein Host-System, das heißt einen Host-Rechner eines Automatisierungssystems oder dergleichen angeschlossen sein, um so Automatisierungsfunktionen erfüllen zu können.

Der Emulator-Datenkanal kann insbesondere von einem logischen Kanal gebildet sein, dessen Datentransfer auf derselben physikalischen Leitung wie die Verbindung zum Host-System erfolgt.

Vorteilhaft ist in der oder jeder Rechnereinheit eine Steuer- und Auswerteeinheit des RFID-Emulator-Sensors bildende RFID-Emulator-Software implementiert.

Mit der RFID-Emulator-Software werden alle Funktionen zur Emulation des RFID-Emulator-Sensors durchgeführt.

Zweckmäßig ist eine der RFID-Emulator-Software zugeordnete RFID-Emulator-Benutzerschnittstelle vorgesehen.

Bei einem Lesevorgang liest der RFID-Emulator-Sensor den Code und sendet den Code an die Rechnereinheit. Die RFID-Emulator-Software in der Rechnereinheit liest die durch den Code definierten Speicherbereiche aus und sendet die Transponder-Emulator-Daten an den RFID-Emulator-Sensor zurück. Dieser verpackt die Daten entsprechend einem AutoID Profil und sendet nachfolgend diese Transponder-Emulator-Daten an das übergeordnete Host-System.

Bei einem Schreibvorgang erfolgt der Ablauf in ähnlicher Weise. Die zu schreibenden Transponder-Emulator-Daten werden vom RFID-Emulator-Sensor an die Rechnereinheit gesendet und dort gespeichert.

Die in der Rechnereinheit abspeicherbaren Daten können generell Objektdaten sein, die zum Objekt, das mit dem jeweiligen Code gekennzeichnet ist, gehören. Die Objektdaten können das Objekt hinsichtlich Beschaffenheit oder Größe charakterisieren. Auch können die Objektdaten Beladungszustände oder sonstige Merkmale sein.

Weiterhin können die Transponder-Emulator-Daten Sensordaten sein.

Dabei werden die Sensordaten von Sensoren generiert, die dem Codeleser zugeordnet sind.

Derartige Sensoren können von Temperatursensoren, Drucksensoren und dergleichen gebildet sein, die für ein Objekt relevante Kenngrößen bestimmen.

Weiterhin können durch Sensorsignale der Sensoren andere Kenngrößen aus der Automatisierungswelt integriert werden, wie zum Beispiel Gewicht, Volumen, Ausmaße, Position, Lage oder Überstände. Dazu spricht generell der RFID-Emulator-Sensor über eine weitere logische Schnittstelle, einer Multisensor-Schnittstelle, die anderen Sensoren an, um deren Daten zum Objekt zeitsynchron zuzuordnen. Eine praktische Ausprägung ist zum Beispiel die Integration von IO-Link-Sensoren. IO-Link-Sensoren unterstützen sehr vielfältige Messprinzipien und Daten der Automatisierungstechnik. Sie lassen sich direkt oder über einen IO-Link-Master ansprechen und datentechnisch integrieren. Auch Lösungsansätze mit einer zusätzlichen physikalischen Zusatzschnittstelle und der direkten Integration über Feldbusse und Ethernet-Netzwerke sowie Funkkommunikationen sind alternativ denkbar.

Vorteilhaft sind den Transponder-Emulator-Daten Transponder-Emulator-Metadaten zugeordnet.

Die Transponder-Emulator-Metadaten sind den Transponder-Emulator-Daten zugeordnet. Insbesondere können die Transponder-Emulator-Metadaten Qualitäts- und Statistikdaten sein, die die Lesevorgänge mit dem RFID-Emulator-Sensor, das heißt Codeleser, kennzeichnen. Diese Transponder-Emulator-Metadaten werden zeitaufgelöst erfasst und den Transponder-Emulator-Daten zugeordnet.

Vorteilhaft bildet die Speichereinheit eine Datenbank aus.

Mittels der RFID-Emulator-Software kann die Speichereinheit beziehungsweise die Datenbank beliebig segmentiert und skaliert werden.

Gemäß einer vorteilhaften Ausführungsform erfolgt die Kommunikation zwischen dem Codeleser und der Rechnereinheit über eine sichere Kommunikationsschnittstelle.

Dabei ist die Kommunikationsschnittstelle zur Einstellung unterschiedlicher Kommunikations- und Sicherheitseinstellungen der RFID-Emulator-Sensoren und Transponder-Emulator-Daten ausgebildet.

Weiter vorteilhaft ist ein Lock-Mechanismus als Zugriffsschutz für in der Speichereinheit gespeicherte Daten vorgesehen.

Der lokale Transport von anlagenrelevanten Informationen muss vor dem unberechtigten Zugriff gesichert sein. Hierzu sind für jeden RFID-Emulator-Sensor Sicherheitsmechanismen vorgesehen. Die Daten auf einem RFID-Emulator-Sensor können durch Sicherheitszertifikate oder durch standardisierte Autorisierungsverfahren der Informationstechnologie wie zum Beispiel Passwörter geschützt sein. Weiterhin weist die Kommunikationsschnittstelle vom Host-System zum RFID-Emulator-Sensor Sicherheitsmerkmale auf, um auch dort ein Auslesen des Passwortes und der Dateninhalte zu verhindern. Für die Kommunikation zwischen Host-System und einem RFID-Emulator-Sensor eignet sich der Kommunikationsstandard OPC UA mit dem Companion Standard (CS) AutoID. OPC UA ist ein Kommunikationssystem, das nach dem Bundesamt für Sicherheit in der Informationstechnik eine sichere Kommunikation in der Automatisierungstechnik erlaubt. Im Zusammenspiel mit der Standardisierung der RFID-Emulator-Sensoren in einem AutoID Profil ist eine universale Nutzung gegeben.

Besonders vorteilhaft ist das Gesamtsystem, das heißt die gesamte erfindungsgemäße Sensoranordnung mit allen zugeordneten Einheiten durch Autentifizierungsmechanismen geschützt, wodurch generell ein unbefugter Zugriff vermieden wird.

Die Lese- wie auch Schreibdaten können über den Lock-Mechanismus (Mechanismus zum Sperren des (unberechtigten) Zugriffs) geschützt werden. In der Regel erfolgt die Sicherung über ein Passwort. Dazu liest der RFID-Emulator-Sensor wie gehabt den Code, das heißt die Codeinformation des Codes und übergibt diese zusammen mit dem Passwort an die RFID-Emulator-Software in der Rechnereinheit. Die Datenbereiche für diese Codeinformation in der Speichereinheit werden damit gesperrt und können in Zukunft nur noch mit dem Passwort gelesen oder geschrieben werden. Die RFID-Emulator-Software quittiert den Status an den RFID-Emulator-Sensor, der wiederum den Status an das Host-System quittiert.

Darüber hinaus wird auch die Änderung eines Passwortes unterstützt. Auch in diesem Ablauf wird zunächst der Code gelesen, bevor das alte und neue Passwort an die RFID-Emulator-Software übergeben, geprüft und gespeichert wird. Dem Host-System wird über den RFID-Emulator-Sensor die Bearbeitung quittiert.

Gemäß einer vorteilhaften Weiterbildung kann die Sensoranordnung mehrere Codeleser und damit mehrere RFID-Emulator-Sensoren aufweisen. Dies ist insbesondere bei der Steuerung und Überwachung komplexer Automatisierungssysteme vorteilhaft.

Gemäß einer ersten Ausgestaltung weist die Sensoranordnung mehrere Codeleser auf, die einer Rechnereinheit zugeordnet sind, wobei jeder Codeleser mit der Rechnereinheit einen RFID-Emulator-Sensor bildet.

Weiterhin ist es möglich, dass die Sensoranordnung mehrere Codeleser aufweist, die unterschiedlichen Rechnereinheiten zugeordnet sind, wobei jeder Codeleser mit der zugeordneten Rechnereinheit einen RFID-Emulator-Sensor bildet.

Generell ist es dabei möglich, dass die oder eine Rechnereinheit ein Cloud-Rechner, ein Server oder ein lokaler Rechner einer Automatisierungsanlage ist.

Gemäß einer ersten Variante sind die unterschiedlichen Rechnereinheiten über Netzwerk-Router verbunden.

Alternativ sind die unterschiedlichen Rechnereinheiten über eine Cloud verbunden.

Der Einsatz von Cloud-Systemen bietet sich insbesondere für komplexe Anlagen, insbesondere Automatisierungssysteme an, die über mehrere Standorte verteilt sind.

Bei derartigen verteilten Systemen kann die RFID-Emulator-Software und die RFID-Emulator-Benutzerschnittstelle auf unterschiedlichen Rechnereinheiten vorgesehen sein.

Insbesondere ist die RFID-Emulator-Benutzerschnittstelle in einem Cloud-System vorgesehen.

Zweckmäßig erfolgt ein Zugriff auf in einer Speichereinheit gespeicherte Transponder-Emulator-Daten und/oder Transponder-Emulator-Metadaten mittels einer RFID-Emulator-Applikationslogik.

Vorteilhaft wird über die RFID-Emulator-Benutzerschnittstelle ein Zugriff auf die RFID-Emulator-Software ermöglicht.

Dabei ist über die RFID-Emulator-Benutzerschnittstelle ein Ansprechen und/ oder eine Administration der RFID-Emulator-Software ermöglicht.

Ein wesentlicher Aspekt bei derartigen komplexen Systemen besteht darin, dass Mittel zur Synchronisierung der Speichereinheit beziehungsweise Datenbank der einzelnen Rechnereinheiten vorgesehen sind.

Mit dieser Synchronisierung wird eine Eindeutigkeit aller RFID-Emulatoren auch dann erreicht, wenn diese RFID-Emulator-Systeme weitverzweigt und gegebenenfalls an verschiedenen Standorten installiert sind.

Die Synchronisierung erfolgt vorteilhaft über eine Datenbank-Replikation für die einzelnen RFID-Emulator-Sensoren, die durch die RFID-Emulator-Software in den einzelnen Rechnereinheiten beziehungsweise RFID-Emulator-Systemen ermöglicht wird.

Durch die Synchronisierung können Veränderungen in den Datensätzen der einzelnen Datenbanken durchgängig verfolgt werden, insbesondere in Form von Transponder-Emulator-Metadaten.

Weiterhin können durch die Synchronisierung zusätzliche vorteilhafte Funktionen realisiert werden, die natürlich bei einem einfachen System mit nur einem RFID-Emulator-Sensor in entsprechender Weise umgesetzt werden können.

So erfolgt über die in den einzelnen RFID-Emulator-Sensoren implementierte, synchronisierte RFID-Emulator-Software eine Erfassung, Konfiguration und Verwaltung von RFID-Emulator-Sensoren.

Dabei können insbesondere Informationen einzelner RFID-Emulator-Sensoren zusammengeführt und mit einem Cloud-System ausgetauscht werden.

Die RFID-Emulator-Software der RFID-Emulator-Sensoren erfasst jeden angeschlossenen RFID-Emulator-Sensor und speichert diesen in einer Datenbank.

Die RFID-Emulator-Software erkennt dabei Abweichungen von zuletzt hinterlegten RFID-Emulator-Sensoren und kennzeichnet und speichert die Änderungen.

Die RFID-Emulator-Sensoren müssen von der RFID-Emulator-Software mindestens einmalig durch Bedienereingaben oder durch Vertrauensmaßnahmen in Form von Sicherheitszertifikaten in einen Geräteverbund der Sensoranordnung übernommen werden. Eine erfolgreiche Übernahme setzt einen erfolgreichen Austausch und Abgleich von Sicherheitsmerkmalen zwischen RFID-Emulator-Sensoren und der RFID-Emulator-Software einer Rechnereinheit voraus.

Die RFID-Emulator-Software einer oder aller Rechnereinheiten speichert von allen RFID-Emulator-Sensoren des Geräteverbunds via Abbild alle Einstellungen definiert durch Parameter, Konfigurationen, Zugangsdaten und dergleichen.

Dabei können derartige archivierte Daten in einen RFID-Emulator-Sensor zurückgespeichert werden. Hierzu kann die RFID-Emulator-Software ein entsprechendes Regelwerk aufweisen.

Auch das Löschen beziehungsweise Zerstören von RFID-Emulator-Daten ist möglich.

Auch hier erfolgt zunächst die Identifikation des Codes mittels des Codelesers. Der Code wird vom RFID-Emulator-Sensor an die Rechnereinheit übergeben. Diese löscht dann alle Daten, die unter diesem Code abgelegt sind. In der Regel ist der Löschvorgang durch ein Passwort geschützt. Das Host-System muss dann das Passwort mit dem Auftrag mitsenden und an die RFID-Emulator-Software übergeben. Die Bearbeitung wird mit einem Status an das Host-System quittiert. Der Code kann zwar physikalisch nicht zerstört werden, aber alle nachfolgenden Lesungen werden dann dem Host-System als nicht gelesen quittiert.

Weiterhin kann die RFID-Emulator-Software Statusänderungen oder Statistikdaten vom RFID-Emulator-Sensor aufzeichnen und speichern.

Weiterhin kann mittels der RFID-Emulator-Software ein Update von Firmware- oder Software-Einheiten von RFID-Emulator-Sensoren durchführbar sein.

Die Software-Updates können insbesondere auch über externe Systeme, die an die RFID-Emulator-Software der Rechnereinheit angeschlossen sind, durchgeführt werden.

Generell ist über die RFID-Emulator-Software und die synchronisierten Datenbanken ein zentraler Zugriff auf gespeicherte Transponder-Emulator-Daten und Transponder-Emulator-Metadaten möglich, wobei diese Daten bei Bedarf sichtbar gemacht werden können. Diese Daten können somit zentral verwaltet, geändert, konfiguriert und auch gelöscht werden. Diese Bearbeitung kann jederzeit erfolgen und benötigt keine Lesezugriffe auf RFID-Emulator-Sensoren.

Das erfindungsgemäße System ist dabei vorteilhaft derart ausgebildet, dass über eine RFID-Emulator-Applikationslogik Transponder-Emulator-Daten und/oder Transponder-Emulator-Metadaten administrierbar, archivierbar, auswertbar oder replizierbar sind.

Gemäß einer vorteilhaften Ausgestaltung bilden mehrere Codeleser eine Multiscan-Anordnung derart, dass mit diesen ein Code gleichzeitig aus unterschiedlichen Richtungen gelesen werden kann. Diese Codeleser sind in einem logischen Netzwerk verschaltet. Nur einer dieser Codeleser bildet mit der zugeordneten Rechnereinheit einen RFID-Emulator-Sensor, wobei der den RFID-Emulator-Sensor bildende Codeleser die weiteren Codeleser der Multiscan-Anordnung zur Durchführung von Lesevorgängen eines Codes gleichzeitig triggert. Der erste von einem der Codeleser gelesene Code wird zur weiteren Verarbeitung herangezogen.

Mit den in der Multiscan-Anordnung angeordneten Codelesern werden Codes aus verschiedenen Richtungen abgetastet, wodurch die Detektionssicherheit erhöht wird.

Wesentlich hierbei ist, dass nur einer dieser Codeleser einen RFID-Emulator-Sensor bildet und die restlichen Codeleser der Multiscan-Anordnung triggert und die Ergebnisse aller Codeleser auswertet.

Die Erfindung wird im Folgenden anhand der Zeichnungen erläutert. Es zeigen:
- Figur 1:: Erstes Ausführungsbeispiel der erfindungsgemäßen Sensoranordnung.
- Figur 2:: Zweites Ausführungsbeispiel der erfindungsgemäßen Sensoranordnung.
- Figur 3:: Drittes Ausführungsbeispiel der erfindungsgemäßen Sensoranordnung.
- Figur 4:: Viertes Ausführungsbeispiel der erfindungsgemäßen Sensoranordnung.
- Figur 5:: Fünftes Ausführungsbeispiel der erfindungsgemäßen Sensoranordnung.
- Figur 6:: Sechstes Ausführungsbeispiel der erfindungsgemäßen Sensoranordnung.
- Figur 7:: Siebtes Ausführungsbeispiel der erfindungsgemäßen Sensoranordnung.
- Figur 8:: Achtes Ausführungsbeispiel der erfindungsgemäßen Sensoranordnung.
- Figur 9:: Neuntes Ausführungsbeispiel der erfindungsgemäßen Sensoranordnung.
- Figur 10:: Zehntes Ausführungsbeispiel der erfindungsgemäßen Sensoranordnung.

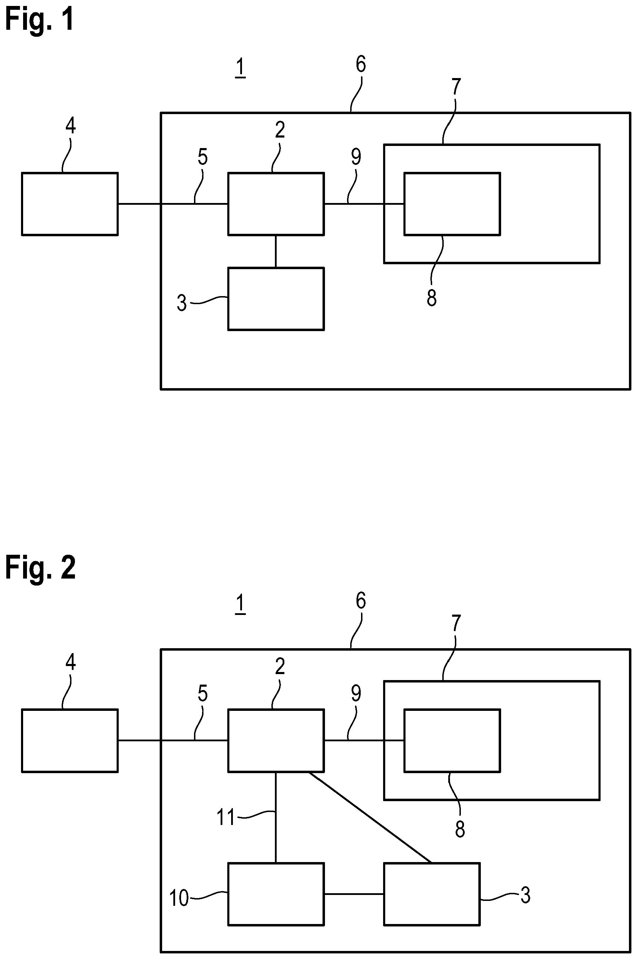

Figur 1 zeigt ein erstes Ausführungsbeispiel der erfindungsgemäßen Sensoranordnung 1. Figur 1 zeigt dabei die Sensoranordnung 1 in ihrer einfachsten Ausgestaltung.

Die Sensoranordnung 1 umfasst einen Codeleser der erfindungsgemäß zu einem RFID-Emulator-Sensor 2 weitergebildet ist. Der Codeleser ist in bekannter Weise als optischer Sensor, insbesondere als Scanner oder Kamerasensor ausgebildet, mit dem Codes 3, insbesondere 1D- oder 2D-Barcodes gelesen werden können. Der Code 3 dient zur Identifikation eines Objekts, auf dem dieser angebracht ist, das heißt der Code 3 bildet einen ID-Code.

Der RFID-Emulator-Sensor 2 ist in bekannter Weise an ein Host-System 4, das heißt wenigstens einen Host-Rechner angeschlossen, der insbesondere Bestandteil eines Automatisierungssystems ist. Allgemein werden die Objektdaten vom RFID-Emulator-Sensor 2 in seiner Datenbank nachgeschaut und die entsprechenden Daten gelesen und dann an das Host-System 4 übergeben. Insbesondere werden die vom RFID-Emulator-Sensor 2 gelesenen Codes 3 interpretiert und dem Host-System 4 die zugehörigen Objektdaten zugeführt, insbesondere zur Durchführung von Automatisierungsaufgaben. Hierzu ist der RFID-Emulator-Sensor 2 über eine Datenleitung 5 mit dem Host-System 4 verbunden.

Der Codeleser ist Bestandteil eines RFID-Emulator-Systems 6, das zur Nachbildung, das heißt Emulation des RFID-Emulator-Sensors 2 dient.

Zu dem RFID-Emulator-System 6 gehört eine Rechnereinheit 7, in welcher eine RFID-Emulator-Software 8 implementiert ist. Die Rechnereinheit 7, das heißt die RFID-Emulator-Software 8 ist über einen Emulator-Datenkanal 9 mit dem RFID-Emulator-Sensor 2 verbunden.

Der Emulator-Datenkanal 9 kann Bestandteil der physikalischen Datenleitung 5 sein. Der Emulator-Datenkanal 9 bildet eine sichere Übertragungsstrecke aus.

Die Datenübertragung über die Datenleitung 5 erfolgt zweckmäßig nach dem Kommunikationsstandard OPC UA mit dem Companion Standard (CS) AutoID. Der Emulator-Datenkanal 9 lehnt sich an diesen Companion Standard an und ist um zusätzliche Dienstmerkmale erweitert.

Für den den RFID-Emulator-Sensor 2 bildenden Codeleser wird die Funktion eines RFID-Sensors dadurch emuliert, dass dem Codeleser in der Rechnereinheit 7 eine Speichereinheit, insbesondere in Form einer Datenbank, zugeordnet wird.

Die Speichereinheit beziehungsweise Datenbank ist über die RFID-Emulator-Software 8 beliebig segmentierbar oder skalierbar.

Der vom Codeleser gelesene Code 3 dient dabei zur indirekten Adressierung der Speichereinheit für ein Ein- und Auslesen von Daten, die insbesondere Transponder-Emulator-Daten in Form von Objektdaten bilden. Die Objektdaten sind dem Objekt, das mit dem Code 3 gekennzeichnet ist, zugeordnet. Weiterhin können Daten in Form von den Transponder-Emulator-Daten zugeordneten Transponder-Emulator-Metadaten gebildet sein. Diese Transponder-Emulator-Metadaten können Qualitäts- oder Statistikdaten sein, die zeitaufgelöst erfasst werden und den Transponder-Emulator-Daten zugeordnet werden.

Bei erstmaligem Lesen des Codes 3 wird ein Speicherobjekt, das heißt Speicherbereich in der Speichereinheit angelegt, der mit dem Code 3 referenziert ist.

Bei einem weiteren Lesevorgang liest der RFID-Emulator-Sensor 2 den Code 3 und sendet diesen an die RFID-Emulator-Software 8. Die RFID-Emulator-Software 8 liest den Speicherbereich in diesem Code 3 aus und sendet die Daten, das heißt Transponder-Emulator-Daten und gegebenenfalls Transponder-Emulator-Metadaten, an den RFID-Emulator-Sensor 2. Der RFID-Emulator-Sensor 2 verpackt diese Daten entsprechend dem AutoID Profil und sendet sie an das Host-System 4.

Ein Schreibvorgang erfolgt in entsprechender Weise, wobei in diesem Fall Daten vom RFID-Emulator-Sensor 2 an die Rechnereinheit 7 gesendet und in dem durch den Code 3 definierten Speicherbereich der Speichereinheit gespeichert werden.

Durch die die Speichereinheit nutzenden Schreib-/Lesevorgänge wird mit den RFID-Emulator-Sensoren 2 die Funktionalität eines RFID-Sensors vollständig nachgebildet, das heißt emuliert.

Die Daten sind vorteilhaft durch einen Lock-Mechanismus, das heißt durch einen Sperrmechanismus gegen unberechtigten Zugriff, gesichert. Vorteilhaft erfolgt die Sicherung über ein Passwort, das der RFID-Emulator-Sensor 2 mit dem gelesenen Code 3 an die Rechnereinheit 7 übergibt. Die entsprechenden Speicherbereiche sind damit passwortgeschützt.

Weiterhin bildet die Speichereinheit eine Datenbank aus.

Die Kommunikation zwischen dem Codeleser und der Rechnereinheit 7 erfolgt über eine sichere Kommunikationsschnittstelle.

Die RFID-Emulator-Software 8 bildet nicht nur eine Steuer- und Auswerteeinheit zur Emulation der Funktionen eines RFID-Sensors.

Weiterhin wird mittels der RFID-Emulator-Software 8 eine Erfassung, Konfiguration und Verwaltung der RFID-Emulator-Sensoren 2 durchgeführt.

Des Weiteren ist mittels der RFID-Emulator-Software 8 ein Update von Firmware- oder Software-Einheiten von RFID-Emulator-Sensoren 2 durchführbar.

Bei der Sensoranordnung 1 gemäß Figur 1 kann die oder eine Rechnereinheit 7 ein Cloud-Rechner, ein Server oder ein lokaler Rechner einer Automatisierungsanlage sein.

Die Ausführungsform gemäß Figur 1 beschreibt die Grundfunktionen der erfindungsgemäßen Sensoranordnung 1, die auch bei den weiteren Sensoranordnungen 1 gemäß den Figuren 2 bis 9 realisiert sind.

Figur 2 zeigt eine Erweiterung der Ausführungsform gemäß Figur 1 dahingehend, dass der den RFID-Emulator-Sensor 2 bildende Codeleser mit einem weiteren Codeleser 10 über ein logisches Netzwerk 11 verbunden ist und mit diesem eine Multiscan-Anordnung bildet.

Insbesondere bilden mehrere Codeleser eine Multiscan-Anordnung derart, dass mit diesen ein Code 3 gleichzeitig aus unterschiedlichen Richtungen gelesen werden kann, wobei diese Codeleser in einem logischen Netzwerk 11 verschaltet sind und nur einer dieser Codeleser mit der zugeordneten Rechnereinheit 7 einen RFID-Emulator-Sensor 2 bildet, wobei der den RFID-Emulator-Sensor 2 bildende Codeleser die weiteren Codeleser 10 der Multiscan-Anordnung zur Durchführung von Lesevorgängen eines Codes 3 gleichzeitig triggert. Der erste von einem der Codeleser gelesene Code 3 wird zur weiteren Verarbeitung herangezogen.

Weiterhin kann mit den Codelesern der Multiscan-Anordnung mehrere beabstandete Codes 3 gelesen werden.

Dabei können die Codes 3 unterschiedliche Anfangsketten, aber gleiche Endzeichenketten aufweisen.

Anhand des gelesenen Codes 3 wird eine Filterung durchgeführt oder wird eine Objektorientierung bestimmt.

Weiterhin werden mit den Codelesern der Multiscan-Anordnung unterschiedliche Fragmente eines Codes 3 gelesen, wobei in einem RFID-Emulator-Sensor 2 oder in einer Rechnereinheit 7, 7' die Fragmente zur Erfassung des Codes 3 zusammengesetzt werden.

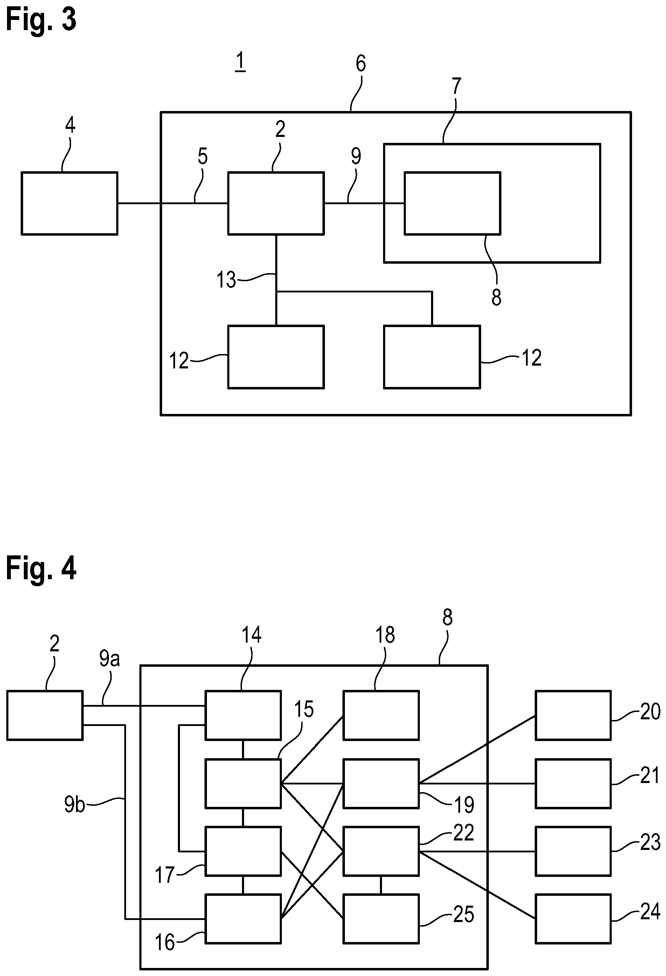

Figur 3 zeigt eine Erweiterung der Ausführungsform gemäß Figur 1 dahingehend, dass dem RFID-Emulator-Sensor 2 weitere Sensoren 12 zugeordnet sind. Die weiteren Sensoren 12 sind über eine Multisensor-Schnittstelle 13 mit dem RFID-Emulator-Sensor 2 verbunden. Vorteilhaft sind die weiteren Sensoren 12 IO-Link Sensoren, die über einen IO-Link Master ansprechbar sind. Weiterhin kann die Multisensor-Schnittstelle 13 in Form eines Feldbusses, eines Ethernet-Netzwerks oder durch eine Funk-Schnittstelle realisiert sein.

Mit den weiteren Sensoren 12 werden als Transponder-Emulator-Daten Sensordaten erfasst, die beispielsweise Kenngrößen des Objekts wie Gewicht, Volumen, Position, Lage oder Überstände erfassen. Auch diesen Sensordaten können Transponder-Emulator-Metadaten zugeordnet sein.

Figur 4 zeigt ein Ausführungsbeispiel, das eine Weiterbildung der Sensoranordnung 1 gemäß Figur 1 zeigt.

Der RFID-Emulator-Sensor 2 ist über den Emulator-Datenkanal 9 bildende sichere Kommunikations-Schnittstellen-Elemente 9a, 9b mit der RFID-Emulator-Software 8 verbunden.

Zur Emulation der Funktion eines RFID-Sensors weist die RFID-Emulator-Software 8 eine Steuer- und Auswerteeinheit auf, die als Softwaremodule eine RFID-Emulator-Transponder-Logik 14, eine RFID-Emulator-Applikationslogik 15 und eine RFID-Emulator-Sensor-Logik 16 aufweist.

Zudem ist eine die Speichereinheit bildende RFID-Emulator-Datenbank 17 vorgesehen. Weiterhin ist eine RFID-Emulator-Benutzerschnittstelle 18 vorgesehen.

Vorteilhaft erfolgt ein Zugriff auf in einer Speichereinheit gespeicherte Transponder-Emulator-Daten und/oder Transponder-Emulator-Metadaten mittels einer RFID-Emulator-Applikationslogik 15.

Des Weiteren ist eine Programmierschnittstelle 19 vorgesehen, über welche die RFID-Emulator-Applikationslogik 15 angesprochen werden kann und die mit einem externen Verzeichnis-Dienst 20 und ein weiteres externes System 21 verbunden ist.

Mittels eines RFID-Emulator-Cloud-Connectors 22 erfolgt eine Verbindung zu einem Cloud-System 23 und einem CRM-System 24, das heißt einem customer relationshipmanagement system.

Im CRM-System 24 können Nutzungsmerkmale für Produktverbesserungen, insbesondere für Business-Modelle ausgewertet werden.

Weiterhin ist ein RFID-Emulator-Datenbank-Synchronisationsmodul 25 vorgesehen. Das RFID-Emulator-Datenbank-Synchronisationsmodul 25 dient zur Synchronisation von Datenbanken unterschiedlicher RFID-Emulator-Softwares 8 für unterschiedliche Rechnereinheiten 7 in komplexen Sensoranordnungen 1 mit mehreren RFID-Emulator-Sensoren 2.

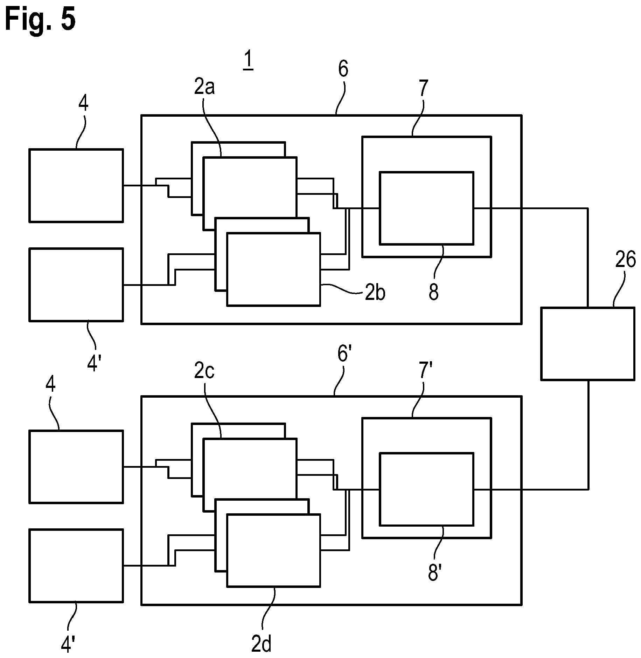

Eine derartige komplexe Sensoranordnung 1 zeigt Figur 5.

Dort sind zwei identisch aufgebaute RFID-Emulator-Systeme 6, 6' mit jeweils zwei RFID-Emulator-Sensoren 2a, 2b beziehungsweise 2c, 2d, die jeweils mit einer Rechnereinheit 7, 7' mit einer RFID-Emulator-Software 8, 8' verbunden sind dargestellt.

Die RFID-Emulator-Systeme 6, 6' sind an Host-Systeme 4, 4' angeschlossen. Die RFID-Emulator-Systeme 6, 6' sind über einen Netzwerk-Router 26 gekoppelt. Die Anzahl der dargestellten Komponenten ist natürlich nicht zwingend.

Diese Variante eignet sich insbesondere für mehrere RFID-Emulator-Systeme 6, die an einem Standort untergebracht sind.

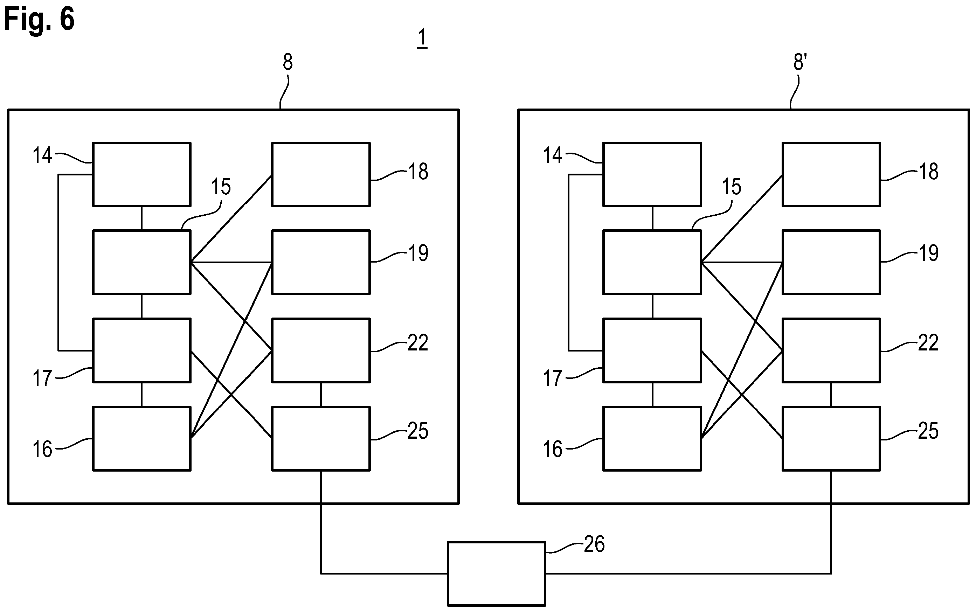

Figur 6 zeigt eine konkrete Ausgestaltung der Sensoranordnung 1 gemäß Figur 5 mit den Systemkomponenten gemäß Figur 4.

Die RFID-Emulator-Datenbank-Synchronisationsmodule 25 sind mit dem Netzwerk-Router 26 verbunden und sorgen für eine Synchronisierung der RFID-Emulator-Systeme 6, 6' durch ein Replizieren der RFID-Emulator-Datenbanken 17. Damit wird eine Eindeutigkeit aller RFID-Emulator-Sensoren 2a - 2d und deren Daten der Sensoranordnung 1 erzielt.

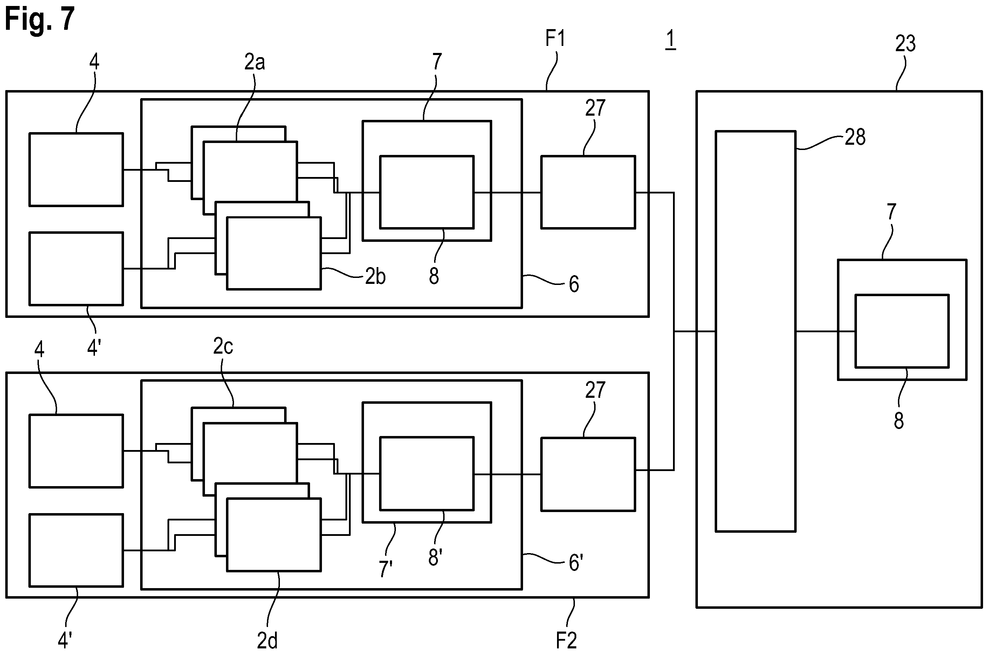

Figur 7 zeigt ein weiteres Ausführungsbeispiel der erfindungsgemäßen Sensoranordnung 1. Diese unterscheidet sich von der Ausführungsform gemäß Figur 5 dadurch, dass die RFID-Emulator-Systeme 6, 6' über ein Cloud-System 23 verbunden sind. Die Anzahl der dargestellten RFID-Emulator-Systeme 6, 6' kann beliebig sein.

Die RFID-Emulator-Systeme 6, 6' können dann an verschiedenen Standorten, insbesondere in verschiedenen Fabriken F1, F2 angeordnet sein. Für eine sichere Ankopplung an das Cloud-System 23 weist jedes RFID-Emulator-System 6, 6' eine Firewall 27 auf.

Für die Rechnereinheiten 7 mit der dort implementierten RFID-Emulator-Software 8, inklusive der dort vorhandenen RFID-Emulator-Datenbank 17 wird ein digitales Abbild in dem Cloud-System 23 geschaffen, wobei hierzu eine Cloud-Infrastruktur 28 genutzt wird.

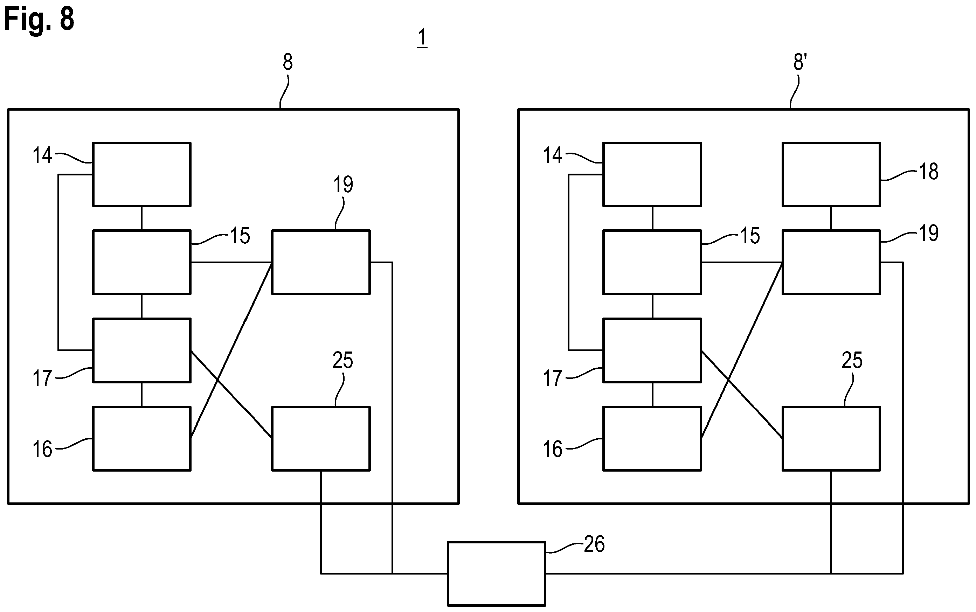

Figur 8 zeigt eine Variante der Ausführungsform gemäß Figur 7. In diesem Fall ist nur in der RFID-Emulator-Software 8' eines RFID-Emulator-Systems 6' eine RFID-Emulator-Benutzerschnittstelle 18 vorgesehen, die für beide RFID-Emulator-Systeme 6, 6' genutzt wird. Mittels den RFID-Emulator-Datenbank-Synchronisationsmodulen 25 erfolgt eine Synchronisierung der RFID-Emulator-Datenbanken 17.

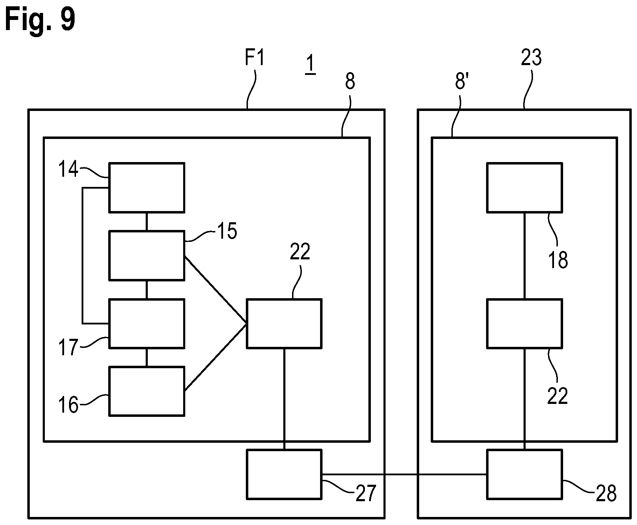

Figur 9 zeigt eine weitere Variante einer Sensoranordnung 1. Dabei ist ein RFID-Emulator-System 6 mit nicht dargestellten RFID-Emulator-Sensoren 2 in einer Fabrik F1 angeordnet. Die RFID-Emulator-Software 8 dieses RFID-Emulator-Systems 6 weist einen RFID-Emulator-Cloud-Connector 22 zur Anbindung an eine Firewall 27 in dieser Fabrik F1 auf. Auch hier kann die Anzahl der RFID-Emulator-Systeme 6, 6' variieren.

Von der Firewall 27 aus erfolgt eine Anbindung an ein Cloud-System 23 über eine dort vorhandene Cloud-Infrastruktur 28. Die Anbindung an eine RFID-Emulator-Software 8' im Cloud-System 23 erfolgt über einen RFID-Emulator-Cloud-Connector 22 und eine RFID-Emulator-Benutzerschnittstelle 18.

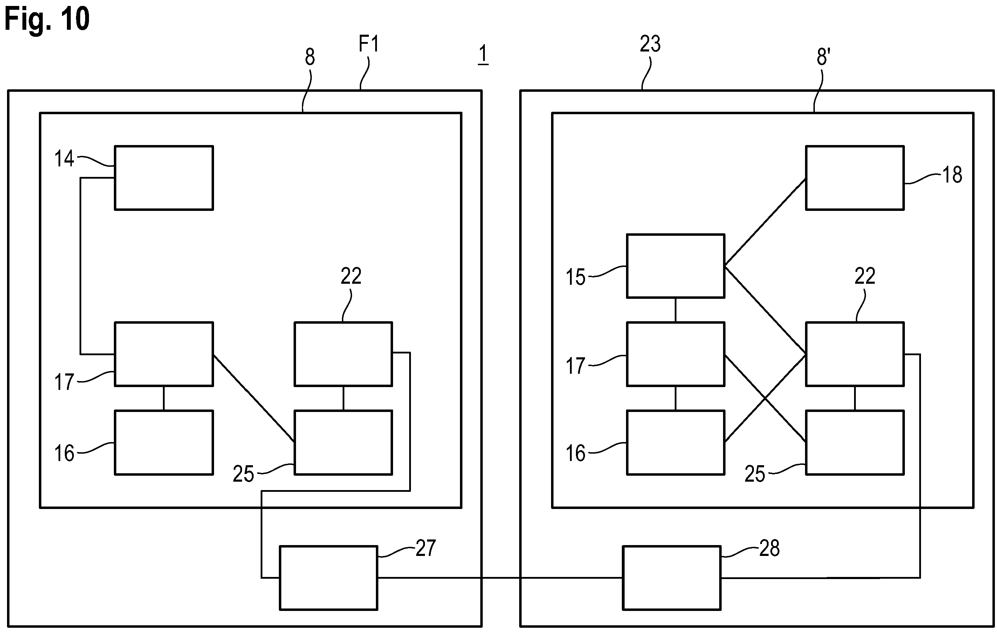

Figur 10 zeigt eine weitere Variante einer Sensoranordnung 1, die eine Erweiterung der Ausführungsform gemäß Figur 9 dahingehend darstellt, dass sowohl in der RFID-Emulator-Software 8 der Fabrik F1 als auch in der RFID-Emulator-Software 8' des Cloud-Systems 23 ein RFID-Emulator-Datenbank-Synchronisationsmodul 25 zur Synchronisierung der RFID-Emulator-Datenbanken 17 vorgesehen ist.

### Bezugszeichenliste

- (1): Sensoranordnung
- (2): RFID-Emulator-Sensor
- (2a - 2d): RFID-Emulator-Sensor
- (3): Code
- (4, 4'): Host-System
- (5): Datenleitung
- (6, 6'): RFID-Emulator-System
- (7, 7'): Rechnereinheit
- (8, 8'): RFID-Emulator-Software
- (9): Emulator-Datenkanal
- (9a, 9b): Kommunikations-Schnittstellen-Element
- (10): Codeleser, weiterer
- (11): Netzwerk
- (12): Sensor
- (13): Multisensor-Schnittstelle
- (14): Transponder-Logik
- (15): RFID-Emulator-Applikationslogik
- (16): RFID-Emulator-Sensor-Logik
- (17): RFID-Emulator-Datenbank
- (18): RFID-Emulator-Benutzerschnittstelle
- (19): Programmierschnittstelle
- (20): Verzeichnis-Dienst
- (21): externes System
- (22): RFID-Emulator-Cloud-Connector
- (23): Cloud-System
- (24): CRM-System
- (25): RFID-Emulator-Datenbank-Synchronisationsmodul
- (26): Netzwerk-Router
- (27): Firewall
- (28): Cloud-Infrastruktur

- F1: Fabrik
- F2: Fabrik

## Patentansprüche

1. Sensoranordnung (1)
mit wenigstens einem als optischer Sensor ausgebildeten Codeleser für Codes (3), welche von dem Codeleser gelesen werden, und mit wenigstens einer Rechnereinheit (7),
**dadurch gekennzeichnet, dass** der Codeleser mit der Rechnereinheit (7) einen RFID-Emulator-Sensor (2) bildet,
wobei für den Codeleser die Funktion eines RFID-Sensors dadurch emuliert ist, dass dem Codeleser in der Rechnereinheit (7) eine Speichereinheit zugeordnet ist,
dass der Codeleser und die Rechnereinheit (7) über einen Emulator-Datenkanal (9) verbunden sind,
über welchen ausschließlich Subsystemdaten oder Transponder-Emulator-Daten vom Codeleser in einen Speicherbereich einer Speichereinheit der Rechnereinheit (7) eingelesen werden oder Subsystemdaten oder Transponder-Emulator-Daten aus dieser Speichereinheit mittels des Codelesers ausgelesen werden,
wobei dieser Speicherbereich von einem vom Codeleser gelesenen Code (3) definiert ist,
dass die Transponder-Emulator-Daten Objektdaten sind, wobei die Objektdaten auf ein Objekt bezogen sind, das mit einem Code (3) gekennzeichnet ist, der von dem den RFID-Emulator-Sensor (2) bildenden Codeleser gelesen wird,
und dass die Subsystemdaten Daten des Codelesers oder mit diesem wechselwirkender Einheiten sind.

2. Sensoranordnung (1) nach Anspruch 1, **dadurch gekennzeichnet, dass** die Transponder-Emulator-Daten Sensordaten sind, die von Sensoren (12) generiert werden, die dem den RFID-Emulator-Sensor (2) bildenden Codeleser zugeordnet sind.

3. Sensoranordnung (1) nach einem der Ansprüche 1 oder 2, **dadurch gekennzeichnet, dass** den Transponder-Emulator-Daten Transponder-Emulator-Metadaten zugeordnet sind, die von Qualitäts- und Statistikdaten gebildet sind.

4. Sensoranordnung (1) nach einem der Ansprüche 1 bis 3, **dadurch gekennzeichnet, dass** die Speichereinheit segmentiert und skaliert ist.

5. Sensoranordnung (1) nach einem der Ansprüche 1 bis 4, **dadurch gekennzeichnet, dass** die Speichereinheit eine Datenbank ausbildet.

6. Sensoranordnung (1) nach einem der Ansprüche 1 bis 5, **dadurch gekennzeichnet, dass** die Kommunikation zwischen dem den RFID-Emulator-Sensor (2) bildenden Codeleser und der Rechnereinheit (7) über eine sichere Kommunikationsschnittstelle erfolgt.

7. Sensoranordnung (1) nach Anspruch 6, **dadurch gekennzeichnet, dass** die Kommunikationsschnittstelle zur Einstellung unterschiedlicher Kommunikations- und Sicherheitseinstellungen der RFID-Emulator-Sensoren (2, 2a - 2d) und Transponder-Emulator-Daten ausgebildet ist.

8. Sensoranordnung (1) nach einem der Ansprüche 1 bis 7, **dadurch gekennzeichnet, dass** ein Lock-Mechanismus als Zugriffsschutz für in der Speichereinheit gespeicherte Daten vorgesehen ist.

9. Sensoranordnung (1) nach einem der Ansprüche 1 bis 8, **dadurch gekennzeichnet, dass** diese mehrere Codeleser aufweist, die einer Rechnereinheit (7) zugeordnet sind, wobei jeder Codeleser mit der Rechnereinheit (7) einen RFID-Emulator-Sensor (2) bildet.

10. Sensoranordnung (1) nach einem der Ansprüche 1 bis 9, **dadurch gekennzeichnet, dass** diese mehrere Codeleser aufweist, die unterschiedlichen Rechnereinheiten (7) zugeordnet sind, wobei jeder Codeleser mit der zugeordneten Rechnereinheit (7) einen RFID-Emulator-Sensor (2) bildet.

11. Sensoranordnung (1) nach einem der Ansprüche 1 bis 10, **dadurch gekennzeichnet, dass** die oder eine Rechnereinheit (7) ein Cloud-Rechner, ein Server oder ein lokaler Rechner einer Automatisierungsanlage ist.

12. Sensoranordnung (1) nach einem der Ansprüche 10 oder 11, **dadurch gekennzeichnet, dass** die unterschiedlichen Rechnereinheiten (7) über Netzwerk-Router (26) verbunden sind.

13. Sensoranordnung (1) nach einem der Ansprüche 10 oder 11, **dadurch gekennzeichnet, dass** die unterschiedlichen Rechnereinheiten (7) über eine Cloud verbunden sind.

14. Sensoranordnung (1) nach einem der Ansprüche 10 bis 13, **dadurch gekennzeichnet, dass** Mittel zur Synchronisierung der Speichereinheiten beziehungsweise der Datenbanken der einzelnen Rechnereinheiten (7) vorhanden sind.

15. Sensoranordnung (1) nach einem der Ansprüche 1 bis 14, **dadurch gekennzeichnet, dass** mehrere Codeleser eine Multiscan-Anordnung bilden.

16. Sensoranordnung (1) nach Anspruch 15, **dadurch gekennzeichnet, dass** mit den Codelesern der Multiscan-Anordnung ein Code (3) gleichzeitig aus unterschiedlichen Richtungen gelesen werden kann, wobei diese Codeleser in einem logischen Netzwerk (11) verschaltet sind und nur einer dieser Codeleser mit der zugeordneten Rechnereinheit (7) einen RFID-Emulator-Sensor (2) bildet, und wobei mittels des den RFID-Emulator-Sensor (2) bildenden Codelesers die weiteren Codeleser der Multiscan-Anordnung zur Durchführung von Lesevorgängen eines Codes (3) gleichzeitig triggert, und wobei der erste von einem der Codeleser gelesene Code (3) zur weiteren Verarbeitung herangezogen wird.

17. Sensoranordnung (1) nach Anspruch 15, **dadurch gekennzeichnet, dass** mit den Codelesern der Multiscan-Anordnung mehrere beabstandete Codes (3) gelesen werden.

18. Sensoranordnung (1) nach Anspruch 16, **dadurch gekennzeichnet, dass** Codes (3) in Form von Barcodes unterschiedliche Anfangsketten, aber gleiche Endzeichenketten aufweisen.

19. Sensoranordnung (1) nach einem der Ansprüche 17 oder 18, **dadurch gekennzeichnet, dass** anhand der gelesenen Codes (3) eine Objektorientierung bestimmt wird.

20. Sensoranordnung (1) nach Anspruch 15, **dadurch gekennzeichnet, dass** mit den Codelesern der Multiscan-Anordnung unterschiedliche Fragmente eines Codes (3) gelesen werden, wobei in einem RFID-Emulator-Sensor (2) oder in einer Rechnereinheit (7, 7') die Fragmente zur Erfassung des Codes (3) zusammengesetzt werden.

21. Sensoranordnung (1) nach einem der Ansprüche 1 bis 20, **dadurch gekennzeichnet, dass** in der oder jeder Rechnereinheit (7) eine Steuer- und Auswerteeinheit des RFID-Emulator-Sensors (2) bildende RFID-Emulator-Software (8) implementiert ist.

22. Sensoranordnung (1) nach Anspruch 16, **dadurch gekennzeichnet, dass** eine RFID-Emulator-Software (8) und eine dieser zugeordneten RFID-Emulator-Benutzerschnittstelle (18) vorgesehen ist.

23. Sensoranordnung (1) nach Anspruch 22, **dadurch gekennzeichnet, dass** die RFID-Emulator-Software (8, 8') und die RFID-Emulator-Benutzerschnittstelle (18) auf unterschiedlichen Rechnereinheiten (7, 7') vorgesehen sind.

24. Sensoranordnung (1) nach einem der Ansprüche 22 oder 23, **dadurch gekennzeichnet, dass** die RFID-Emulator-Benutzerschnittstelle (18) in einem Cloud-System (23) vorgesehen ist.

25. Sensoranordnung (1) nach einem der Ansprüche 17 bis 19, **dadurch gekennzeichnet, dass** ein Zugriff auf in einer Speichereinheit gespeicherte Transponder-Emulator-Daten oder Transponder-Emulator-Metadaten mittels einer RFID-Emulator-Applikationslogik (15) erfolgt.

26. Sensoranordnung (1) nach Anspruch 22, **dadurch gekennzeichnet, dass** über die RFID-Emulator-Benutzerschnittstelle (18) ein Zugriff auf die RFID-Emulator-Software (8. 8') ermöglicht wird.

27. Sensoranordnung (1) nach Anspruch 22, **dadurch gekennzeichnet, dass** über die RFID-Emulator-Benutzerschnittstelle (18) ein Ansprechen oder eine Administration der RFID-Emulator-Software (8, 8') ermöglicht wird.

28. Sensoranordnung (1) nach Anspruch 25, **dadurch gekennzeichnet, dass** über die RFID-Emulator-Applikationslogik (15) Transponder-Emulator-Daten oder Transponder-Emulator-Metadaten administriert, archiviert, ausgewertet oder repliziert werden.

29. Sensoranordnung (1) nach Anspruch 28, **dadurch gekennzeichnet, dass** eine Programmierschnittstelle (19) vorgesehen ist, über welche die RFID-Emulator-Applikationslogik (15) angesprochen werden kann.

30. Sensoranordnung (1) nach einem der Ansprüche 22 bis 29, **dadurch gekennzeichnet, dass** mittels der RFID-Emulator-Software (8, 8') eine Erfassung, Konfiguration, Diagnose, Überwachung und Verwaltung der RFID-Emulator-Sensoren (2, 2a - 2d) durchgeführt wird.

31. Sensoranordnung (1) nach einem der Ansprüche 22 bis 30, **dadurch gekennzeichnet, dass** mittels der RFID-Emulator-Software (8, 8') ein Update von Firmware- oder Software-Einheiten von RFID-Emulator-Sensoren (2, 2a - 2d) durchgeführt wird.

32. Sensoranordnung (1) nach einem der Ansprüche 1 bis 31, **dadurch gekennzeichnet, dass** diese an ein Host-System (4) angeschlossen ist.

33. Sensoranordnung (1) nach einem der Ansprüche 1 bis 32, **dadurch gekennzeichnet, dass** diese durch Autentifizierungsmechanismen abgesichert ist.

## Claims

1. Sensor arrangement (1)
with at least one code reader designed as an optical sensor for codes (3) which are read by the code reader, and with at least one computer unit (7),
**characterised in that** the code reader forms an RFID emulator sensor (2) with the computer unit (7),
wherein the function of an RFID sensor is emulated for the code reader **in that** a memory unit is assigned to the code reader in the computer unit (7),
the code reader and the computer unit (7) are connected via an emulator data channel (9),
via which subsystem data or transponder emulator data are read exclusively by the code reader into a memory area of a memory unit of the computer unit (7) or subsystem data or transponder emulator data are read out of this memory unit by means of the code reader,
wherein this memory area is defined by a code (3) read by the code reader,
**in that** the transponder emulator data is object data, the object data being related to an object which is labelled with a code (3) which is read by the code reader forming the RFID emulator sensor (2), and **in that** the subsystem data is data of the code reader or of units interacting therewith.

2. Sensor arrangement (1) according to claim 1, **characterised in that** the transponder emulator data are sensor data which are generated by sensors (12) which are assigned to the code reader forming the RFID emulator sensor (2).

3. Sensor arrangement (1) according to one of claims 1 or 2, **characterised in that** the transponder emulator data is associated with transponder emulator metadata formed by quality and statistical data.

4. Sensor arrangement (1) according to one of claims 1 to 3, **characterised in that** the memory unit is segmented and scaled.

5. Sensor arrangement (1) according to one of claims 1 to 4, **characterised in that** the memory unit forms a database.

6. Sensor arrangement (1) according to one of claims 1 to 5, **characterised in that** the communication between the code reader forming the RFID emulator sensor (2) and the computer unit (7) takes place via a secure communication interface.

7. Sensor arrangement (1) according to claim 6, **characterised in that** the communication interface is designed for setting different communication and security settings of the RFID emulator sensors (2, 2a - 2d) and transponder emulator data.

8. Sensor arrangement (1) according to one of claims 1 to 7, **characterised in that** a lock mechanism is provided as access protection for data stored in the memory unit.

9. Sensor arrangement (1) according to one of claims 1 to 8, **characterised in that** it has a plurality of code readers which are assigned to a computer unit (7), each code reader forming an RFID emulator sensor (2) with the computer unit (7).

10. Sensor arrangement (1) according to one of claims 1 to 9, **characterised in that** it has a plurality of code readers which are assigned to different computer units (7), each code reader forming an RFID emulator sensor (2) with the assigned computer unit (7).

11. Sensor arrangement (1) according to one of claims 1 to 10, **characterised in that** the or a computer unit (7) is a cloud computer, a server or a local computer of an automation system.

12. Sensor arrangement (1) according to one of claims 10 or 11, **characterised in that** the different computer units (7) are connected via network routers (26).

13. Sensor arrangement (1) according to one of claims 10 or 11, **characterised in that** the different computer units (7) are connected via a cloud.

14. Sensor arrangement (1) according to one of claims 10 to 13, **characterised in that** means are provided for synchronising the memory units or the databases of the individual computer units (7).

15. Sensor arrangement (1) according to one of claims 1 to 14, **characterised in that** several code readers form a multiscan arrangement.

16. Sensor arrangement (1) according to claim 15, **characterised in that** a code (3) can be read simultaneously from different directions with the code readers of the multiscan arrangement, wherein these code readers are interconnected in a logical network (11) and only one of these code readers forms an RFID emulator sensor (2) with the associated computer unit (7), and wherein the code reader forming the RFID emulator sensor (2) simultaneously triggers the other code readers of the multiscan arrangement to perform read operations of a code (3), and wherein the first code (3) read by one of the code readers is used for further processing.

17. Sensor arrangement (1) according to claim 15, **characterised in that** several spaced codes (3) are read with the code readers of the multiscan arrangement.

18. Sensor arrangement (1) according to claim 16, **characterised in that** codes (3) in the form of barcodes have different start strings but the same end strings.

19. Sensor arrangement (1) according to one of claims 17 or 18, **characterised in that** an object orientation is determined on the basis of the read codes (3).

20. Sensor arrangement (1) according to claim 15, **characterised in that** the code readers of the multiscan arrangement are used to read different fragments of a code (3), the fragments being combined in an RFID emulator sensor (2) or in a computer unit (7, 7') to detect the code (3).

21. Sensor arrangement (1) according to one of claims 1 to 20, **characterised in that** RFID emulator software (8) forming a control and evaluation unit of the RFID emulator sensor (2) is implemented in the or each computer unit (7).

22. Sensor arrangement (1) according to claim 16, **characterised in that** an RFID emulator software (8) and an RFID emulator user interface (18) assigned thereto are provided.

23. Sensor arrangement (1) according to claim 22, **characterised in that** the RFID emulator software (8, 8') and the RFID emulator user interface (18) are provided on different computer units (7, 7').

24. Sensor arrangement (1) according to one of claims 22 or 23, **characterised in that** the RFID emulator user interface (18) is provided in a cloud system (23).

25. Sensor arrangement (1) according to one of claims 17 to 19, **characterised in that** access to transponder emulator data or transponder emulator metadata stored in a memory unit takes place by means of an RFID emulator application logic (15).

26. Sensor arrangement (1) according to claim 22, **characterised in that** access to the RFID emulator software (8. 8') is enabled via the RFID emulator user interface (18).

27. Sensor arrangement (1) according to claim 22, **characterised in that** access to or administration of the RFID emulator software (8, 8') is enabled via the RFID emulator user interface (18).

28. Sensor arrangement (1) according to claim 25, **characterised in that** transponder emulator data or transponder emulator metadata are administered, archived, evaluated or replicated via the RFID emulator application logic (15).

29. Sensor arrangement (1) according to claim 28, **characterised in that** a programming interface (19) is provided via which the RFID emulator application logic (15) can be addressed.

30. Sensor arrangement (1) according to one of claims 22 to 29, **characterised in that** the RFID emulator software (8, 8') is used to record, configure, diagnose, monitor and manage the RFID emulator sensors (2, 2a - 2d).

31. Sensor arrangement (1) according to one of claims 22 to 30, **characterised in that** an update of firmware or software units of RFID emulator sensors (2, 2a - 2d) is carried out by means of the RFID emulator software (8, 8').

32. Sensor arrangement (1) according to one of claims 1 to 31, **characterised in that** it is connected to a host system (4).

33. Sensor arrangement (1) according to one of claims 1 to 32, **characterised in that** it is secured by authentication mechanisms.

## Revendications

1. Système de capteur (1)
comportant au moins un lecteur de code conçu comme un capteur optique pour les codes (3) qui sont lus par le lecteur de code, et au moins une unité informatique (7),
**caractérisé par le fait que** le lecteur de code forme un capteur émulateur RFID (2) avec l'unité informatique (7),
dans lequel la fonction de capteur RFID est émulée pour le lecteur de code en ce qu'une unité de mémoire est affectée au lecteur de code dans l'unité informatique (7),
le lecteur de code et l'unité informatique (7) sont reliés par un canal de données émulateur (9),
par lequel les données du sous-système ou les données de l'émulateur de transpondeur sont lues exclusivement par le lecteur de code dans une zone de mémoire d'une unité de mémoire de l'unité de calcul (7) ou les données du sous-système ou les données de l'émulateur de transpondeur sont lues à partir de cette unité de mémoire au moyen du lecteur de code,
cette zone de mémoire est définie par un code (3) lu par le lecteur de code,
les données de l'émulateur de transpondeur sont des données d'objet, les données d'objet étant liées à un objet étiqueté avec un code (3) lu par le lecteur de code formant le capteur émulateur RFID (2), et les données du sous-système sont des données du lecteur de code ou d'unités qui interagissent avec lui.

2. Système de capteur (1) selon la revendication 1, **caractérisé par le fait que** les données de l'émulateur de transpondeur sont des données de capteur générées par des capteurs (12) affectés au lecteur de code formant le capteur émulateur RFID (2).

3. Système de capteur (1) selon l'une des revendications 1 ou 2, **caractérisé par le fait que** les données de l'émulateur de transpondeur sont associées aux métadonnées de l'émulateur de transpondeur formées par des données statistiques et de qualité .

4. Système de capteur (1) selon l'une des revendications 1 à 3, **caractérisé en ce que** l'unité de mémoire est segmentée et mise à l'échelle.

5. Système de capteur (1) selon l'une des revendications 1 à 4, **caractérisé en ce que** l'unité de mémoire forme une base de données.

6. Système de capteur (1) selon l'une des revendications 1 à 5, **caractérisé en ce que** la communication entre le lecteur de code formant le capteur émulateur RFID (2) et l'unité informatique (7) s'effectue par l'intermédiaire d'une interface de communication sécurisée.

7. Système de capteur (1) selon la revendication 6, **caractérisé par le fait que** l'interface de communication est conçue pour définir différents paramètres de communication et de sécurité des capteurs émulateurs RFID (2, 2a - 2d) et des données de l'émulateur de transpondeur.

8. Système de capteur (1) selon l'une des revendications 1 à 7, **caractérisé par le fait qu'**un mécanisme de verrouillage est prévu pour protéger l'accès aux données stockées dans l'unité de mémoire.

9. Système de capteur (1) selon l'une des revendications 1 à 8, **caractérisé en ce qu'**il comporte plusieurs lecteurs de code affectés à une unité informatique (7), chaque lecteur de code formant un capteur émulateur RFID (2) avec l'unité informatique (7).

10. Système de capteur (1) selon l'une des revendications 1 à 9, **caractérisé en ce qu'**il comporte plusieurs lecteurs de code affectés à différentes unités informatiques (7), chaque lecteur de code formant un capteur émulateur RFID (2) avec l'unité informatique (7) qui lui est affectée.

11. Système de capteur (1) selon l'une des revendications 1 à 10, **caractérisé par le fait que** l'unité informatique (7) est un ordinateur en nuage, un serveur ou un ordinateur local d'un système d'automatisation.

12. Système de capteur (1) selon l'une des revendications 10 ou 11, **caractérisé par le fait que** les différentes unités informatiques (7) sont connectées par l'intermédiaire de routeurs de réseau (26).

13. Système de capteur (1) selon l'une des revendications 10 ou 11, **caractérisé par le fait que** les différentes unités informatiques (7) sont connectées par l'intermédiaire d'un nuage.

14. Système de capteur (1) selon l'une des revendications 10 à 13, **caractérisé en ce que** des moyens sont prévus pour synchroniser les unités de mémoire ou les bases de données des différentes unités informatiques (7).

15. Système de capteur (1) selon l'une des revendications 1 à 14, **caractérisé par le fait que** plusieurs lecteurs de codes forment un dispositif multiscan.

16. Système de capteur (1) selon la revendication 15, **caractérisé en ce qu'**un code (3) peut être lu simultanément depuis différentes directions avec les lecteurs de code du dispositif multiscan, dans lequel ces lecteurs de code sont interconnectés dans un réseau logique (11) et un seul de ces lecteurs de code forme un capteur émulateur RFID (2) avec l'unité informatique associée (7), et dans lequel le lecteur de code formant le capteur émulateur RFID (2) déclenche simultanément les autres lecteurs de code de l'agencement multiscan pour effectuer des opérations de lecture d'un code (3), et dans lequel le premier code (3) lu par l'un des lecteurs de code est utilisé pour un traitement ultérieur.

17. Système de capteur (1) selon la revendication 15, **caractérisé par le fait que** plusieurs codes espacés (3) sont lus par les lecteurs de code du dispositif multiscan.

18. Système de capteur (1) selon la revendication 16, **caractérisé par le fait que** les codes (3) sous forme de codes à barres ont des chaînes de début différentes mais les mêmes chaînes de fin.

19. Système de capteur (1) selon l'une des revendications 17 ou 18, **caractérisé par le fait qu'**une orientation de l'objet est déterminée sur la base des codes lus (3).

20. Système de capteur (1) selon la revendication 15, **caractérisé par le fait que** les lecteurs de code du dispositif multiscan sont utilisés pour lire différents fragments d'un code (3), les fragments étant combinés dans un capteur émulateur RFID (2) ou dans une unité informatique (7, 7') pour détecter le code (3).

21. Système de capteur (1) selon l'une des revendications 1 à 20, **caractérisé par le fait que** le logiciel d'émulation RFID (8) formant une unité de contrôle et d'évaluation du capteur d'émulation RFID (2) est mis en œuvre dans l'unité informatique (7) ou dans chaque unité informatique (7).

22. Système de capteur (1) selon la revendication 16, **caractérisé par** la présence d'un logiciel d'émulation RFID (8) et d'une interface utilisateur d'émulation RFID (18) qui lui est associée.

23. Système de capteur (1) selon la revendication 22, **caractérisé en ce que** le logiciel d'émulation RFID (8, 8') et l'interface utilisateur d'émulation RFID (18) sont fournis sur des unités informatiques différentes (7, 7').

24. Système de capteur (1) selon l'une des revendications 22 ou 23, **caractérisé en ce que** l'interface utilisateur de l'émulateur RFID (18) est fournie dans un système en nuage (23).

25. Système de capteur (1) selon l'une des revendications 17 à 19, **caractérisé par le fait que** l'accès aux données ou aux métadonnées de l'émulateur de transpondeur stockées dans une unité de mémoire s'effectue au moyen d'une logique d'application de l'émulateur RFID (15).

26. Système de capteur (1) selon la revendication 22, **caractérisé par le fait que** l'accès au logiciel de l'émulateur RFID (8. 8') est autorisé via l'interface utilisateur de l'émulateur RFID (18).

27. Système de capteur (1) selon la revendication 22, **caractérisé en ce que** l'accès au logiciel d'émulation RFID (8, 8') ou la gestion de ce logiciel sont activés via l'interface utilisateur de l'émulateur RFID (18).

28. Système de capteur (1) selon la revendication 25, **caractérisé par le fait que** les données ou les métadonnées de l'émulateur de transpondeur sont gérées, archivées, évaluées ou répliquées via la logique d'application de l'émulateur RFID (15).

29. Système de capteur (1) selon la revendication 28, **caractérisé par le fait qu'**une interface de programmation (19) est fournie pour permettre de s'adresser à la logique d'application de l'émulateur RFID (15).

30. Système de capteur (1) selon l'une des revendications 22 à 29, **caractérisé en ce que** le logiciel de l'émulateur RFID (8, 8') est utilisé pour enregistrer, configurer, diagnostiquer, surveiller et gérer les capteurs de l'émulateur RFID (2, 2a - 2d).

31. Système de capteur (1) selon l'une des revendications 22 à 30, **caractérisé par le fait qu'**une mise à jour du micrologiciel ou des unités logicielles des capteurs émulateurs RFID (2, 2a - 2d) est effectuée au moyen du logiciel émulateur RFID (8, 8').

32. Système de capteur (1) selon l'une des revendications 1 à 31, **caractérisé par le fait qu'**il est connecté à un système hôte (4).

33. Système de capteur (1) selon l'une des revendications 1 à 32, **caractérisé en ce qu'**il est sécurisé par des mécanismes d'authentification.
